# EUROPEAN PATENT SPECIFICATION

(11) **EP 3 515 877 B1**
(45) Date of publication and mention of the grant of the patent: **05.08.2020**
(21) Application number: 17791149.2
(22) Date of filing: 26.09.2017
(51) Int. Cl.: C04B 33/00

(54) **METHOD FOR PRODUCING FLOWABLE CERAMIC MATERIAL IN POWDER FORM FOR THE MANUFACTURING OF CERAMIC TILES**
VERFAHREN ZUR HERSTELLUNG VON FLIESSFÄHIGEM KERAMISCHEM MATERIAL IN PULVERFORM ZUR HERSTELLUNG VON KERAMISCHEN FLIESEN
PROCÉDÉ DE PRODUCTION D'UNE MATIÈRE CÉRAMIQUE DOUÉE D'ÉCOULEMENT SOUS FORME PULVÉRULENTE POUR LA FABRICATION DE CARREAUX DE CÉRAMIQUE

(30) Priority: 26.09.2016 IT 201600096358
(43) Date of publication of application: 31.07.2019
(73) Proprietor: L.B. Officine Meccaniche S.p.A., 41042 Fiorano Modenese (Modena) (IT)
(72) Inventor: BENEDETTI, Emilio, 41049 Sassuolo (Modena) (IT); CAVANI, Giuseppe, 41043 Formigine (Modena) (IT)
(74) Representative: Molinari, Marinella
(86) International application number: PCT/IB2017/055856
(87) International publication number: WO 2018/055599

(56) References cited:
- EP-A1- 2 633 903
- EP-A1- 2 746 239
- WO-A1-2010/146075
- WO-A1-2011/117717

## Description

The invention relates to a method for producing flowable ceramic material in powder form, in particular ceramic granules that are suitable for manufacturing ceramic tiles by pressing, in particular, porcelain stoneware tiles as indicated in claim 1.

To obtain ceramic tiles of great compactness, i.e. with low water absorption and high resistance to breakage, in particular to obtain porcelain stoneware tiles, it is necessary to select suitable raw materials, for example substantially devoid of iron, reduce the dimension of the particles by milling to increase the active surface of the components of the raw materials, mixing the milled raw materials so as to obtain an even distribution of the various components and a more intimate contact therebetween to promote vitrification during firing. Producing ceramic granules after milling enables the ceramic tiles to be formed by pressing. Further, the ceramic granules demonstrate greater flowability than fine ceramic powders that are on the other hand difficult to move by conveying devices in a production system precisely because of the great specific surface thereof.

On the basis of the quantity of water used, two known processes for preparing raw materials for manufacturing ceramic tiles can be distinguished, indicated respectively as a "wet" process and as a "dry" process.

In the wet process, the dosed raw materials are milled with a large quantity of water, for example in a cylindrical mill, to obtain a liquid suspension, known as slip, which is sprayed in an atomizer. In the latter, the drops of sprayed slip are hit by a current of hot air that evaporates water from the slip so as to obtain an atomized powder, i.e. round ceramic granules, of a dimension comprised on average between 0.2 and 0.9 mm and which have a residual water content, i.e. humidity, around 4-7%. The atomized powder is then used to feed a forming press where a pressed semifinished product is pressed, then fired in a horizontal kiln, for example a roller kiln and thus a ceramic tile is produced. During atomization, a large part of the water is used as a vehicle in milling, this requiring great thermal energy and thus high fuel consumption.

Further, in order to permit an air-drops heat exchange, the atomizer has great dimensions so that the path of the drops of slip is sufficient for extracting the necessary water content; it is thus necessary to provide ample space for installing an atomizer that are not always available, this involving plant complications.

In the dry process, the raw materials are milled in a roller or hammer mill according to a preset recipe and subsequently granulated in a rotating drum by adding a defined quantity of water, generally rather limited if compared with that used in the wet process. Although this "dry" technique has overcome various drawbacks of the atomization process, showing that it is a valid alternative thereto, dry mixing of the raw materials may produce zones of ceramic material that are not sufficiently homogeneous, which are detectable only after firing of the ceramic tiles as zones having different water absorption and thus porosity features. This is not desirable in ceramic tiles in general and in particular in porcelain stoneware tiles, which are required to have great flexure breaking load resistance, which can on the other hand be reduced because of such zones of less compactness.

A traditional method of producing ceramic tiles provides for forming ceramic tiles by extruding a paste prepared by wetting a mixture of milled clays. Nevertheless, this forming method does not allow types of ceramic tiles to be obtained that have low - near zero - porosity like porcelain stoneware. In fact, porcelain stoneware tiles formed by extrusion are obtained by wetting an atomized powder, with consequent high energy consumption, as mentioned above.

One object of the invention is to improve known techniques for producing flowable ceramic material in powder form for manufacturing ceramic tiles, in particular porcelain stoneware.

A further object is to provide a method for producing flowable ceramic material in powder form that enables the advantages of intimate mixing that are obtainable to be maintained with wet milling whilst nevertheless reducing energy consumption.

Another further object is to produce a flowable ceramic material in powder form having a substantially uniform composition of each grain of powder.

According to the invention there is provided a method for producing flowable ceramic material in powder form as defined by claim 1.

Owing to the invention, it is possible to produce a ceramic powder that is sufficiently flowable for feeding a ceramic press by reducing the quantity of process water and thus the energy necessary for the removal thereof.

Owing to the method according to the invention, the ceramic granules that are produced have a higher degree of homogeneity of composition than the composition that is obtainable with the known dry process.

Still owing to the invention, it is possible to obtain a ceramic granule having features of humidity, apparent density, granulometry and flowability that are comparable to those of an atomized powder of known type obtained by atomization.

The invention can be better understood and implemented with reference to the attached drawings that illustrate some embodiments thereof by way of non-limiting example, in which:

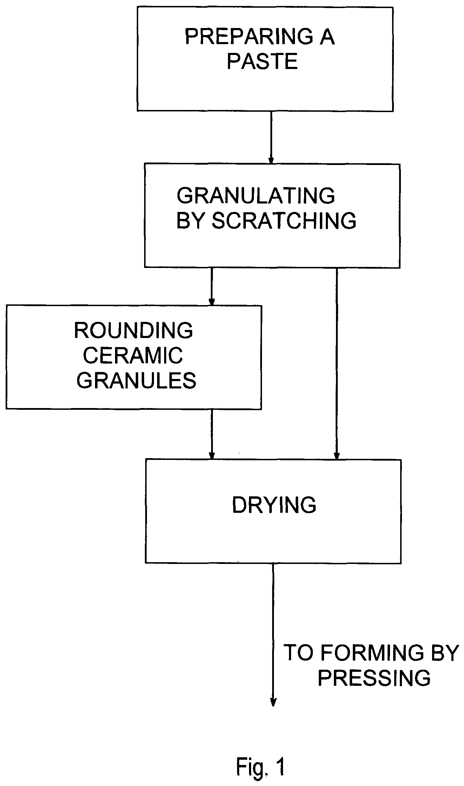

Figure 1 is a flow diagram of steps of the method according to the invention;

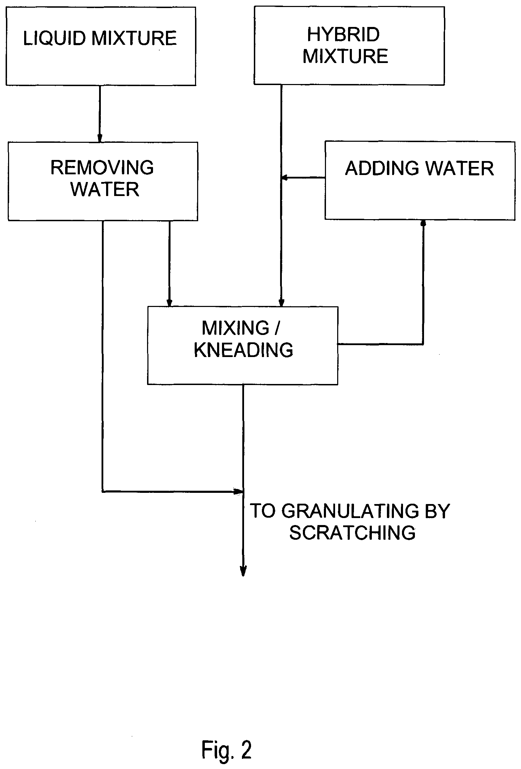

Figure 2 is a diagram summarizing the steps for preparing a paste according to the method of Figure 1;

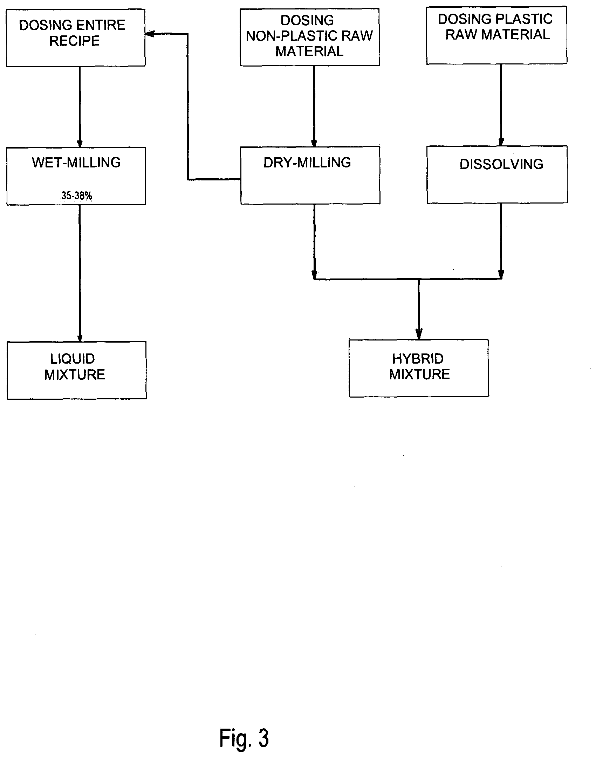

Figure 3 is a diagram summarizing preliminary steps before preparing the paste according to the method of Figure 1.

With reference to the Figures, the method according to the invention produces a flowable ceramic material in powder form, in particular in granules, for manufacturing ceramic tiles through preparing a paste comprising a mixture of raw materials in a water vehicle, the raw materials being chosen and dosed according to a formulation or recipe of a ceramic mix for ceramic tiles, in particular porcelain stoneware ceramic tiles. The raw materials thus comprise clays, inerts and fluxes.

The paste has a water content that is such as to show a "plastic" behaviour, due to the presence of clays in the mixture. On the basis of the steps applied to obtain the paste, the paste can be obtained in the form of lumps, of rather contained dimensions, which can have average dimensions of generally around 1 cm.

The paste is then subsequently granulated with a granulation technique that scratches the paste. For example, the paste is made to interact with a brush that removes pellets from the paste, thus obtaining ceramic granules. If the paste is in the form of lumps, granulation by scratching reduces the lumps into granules of lesser dimension.

The still plastic ceramic granules are then given a round shape by rolling so as to obtain rounded granules.

Subsequently, the rounded granules are dried to obtain the flowable ceramic material in granular powder form that is suitable for feeding a ceramic press for forming ceramic tiles. Alternatively, after granulation, the paste pellets can be dried without the step of rounding the ceramic granules.

The prepared paste has a water content, i.e. humidity, which can be comprised between 18% and 20% in weight, depending on the raw materials used.

On the basis of the method of preparation, the pastes can have a lower humidity, for example between 14% and 17% in weight, in particular between 14% and 16% in weight, even more in particular about 15% in weight.

To prepare the paste, the raw materials must first be treated according to preliminary steps that comprise dosage, milling and mixing of the raw materials.

These preliminary steps of preparing the pastes can be performed according to a "wet" technique, in which the raw materials are milled wet, or according to a "hybrid" technique, in which the raw materials are partially wet-milled and partially dry-milled. In other words, preparing the paste with a hybrid technique comprises mixing a fraction of dry-milled raw materials with the remaining fraction of wet-milled raw materials.

In one embodiment of hybrid technique, part of the raw materials, in particular consisting of materials that the expert person considers to be "hard" or "non-plastic", such as for example feldspar and quartz, and prepared dry and part of the raw materials, which the expert considers to be "plastic", because they have plastic properties in the presence of water, such as for example clay, is dissolved, i.e. dispersed, in a water vehicle, thus forming a water-based suspension. In other words, a fraction of the dry-milled recipe comprises non-clay raw materials and the remaining fraction of wet-milled raw materials comprises clay raw materials such that when they are joined together they correspond to the recipe.

In this case, the paste is obtained by mixing the dry-milled recipe part and the part of the recipe prepared wet. The paste obtained can be in the form of agglomerates or small lumps. In another embodiment of the hybrid technique, the wet-milled part and the dry-milled part have the same recipe of ceramic mix and are not recipe portions having a different composition of raw materials, as on the other hand is provided in the previously disclosed hybrid technique embodiment. In this embodiment of the same recipe, the paste is obtained by mixing a recipe of wet-milled raw materials with the same recipe of dry-milled raw materials, dosed in preset portions. In other words, a fraction of material having the given recipe is wet-milled and a remaining fraction of material having the same composition of raw materials in relation to the given recipe is dry-milled. The two fractions are then mixed together.

For example, if a ceramic mix recipe comprises 35% "plastic", i.e. clay raw materials, and 65% "hard", non-plastic raw materials, the paste is prepared by mixing 78% in weight of dry-milled recipe with 22% in weight of the same wet-milled recipe. The percentage of dry-milled recipe generally varies between about 69% and about 82% in weight. As a result, the percentage of wet-milled recipe generally varies between about 18% and about 31% in weight.

The paste thus obtained can be in the form of agglomerates or small lumps.

When preparing raw materials wet, a liquid mixture is obtained. Subsequently, from the liquid mixture a quantity of excess water is removed to obtain a paste, as will be explained below.

In the hybrid cases, part of the raw materials constitutes a water-based suspension, thus a liquid portion of mixture, and a remaining part constitutes a solid portion of mixture. In this case, the liquid portion and the solid portion considered overall define the quantity of mixture that it is desired to obtain according to the preset recipe and which will be subsequently indicated as "hybrid mixture" even when the two portions are not yet mixed together. In the case of a hybrid mixture, the paste is obtained by mixing the solid portion with the liquid portion, for example in a continuous mixer or in a discontinuous mixer. In particular, the liquid portion is injected during mixing of the solid portion and the paste is formed by agglomeration. The paste obtained in these cases is in the form of agglomerates or small lumps.

It is possible to prepare the paste also according to a "dry" technique, i.e. by dry-milling, for example in a roller mill, the entire recipe of the raw materials and not just a "non-plastic" part as in one embodiment of the hybrid case. During dry-milling, also the components are dry-milled. Subsequently, the dry-milled raw materials are mixed with a quantity of water-based liquid that enables paste having the desired humidity to be obtained. Also in this embodiment, the paste obtained can be in the form of lumps. Nevertheless, this technique is less advantageous from the energy point of view, it being necessary to use energy to mill also the "plastic" part of the recipe, which can on the other hand be effectively dispersed in water at a lower cost.

In all cases, from the liquid mixture or from the hybrid mixture, or possibly from the solid mixture, the paste is prepared.

The liquid mixture is a water-based suspension and can be obtained by wet-milling of known type in the context of the production of ceramic tiles, for example in a continuous or discontinuous cylindrical mill, with or without milling bodies, as a water-based suspension, known also as slip, comprising solid particles of the raw materials dispersed in a water vehicle. The raw materials are dosed upstream of milling and, during this last step, intimate milling of the components of the mixture occurs.

One version of the wet technique provides dry pre-milling of the "non-plastic", i.e. "hard" raw materials, and subsequently putting these dry pre-milled materials together with the remaining raw materials of the recipe to mill the entire wet recipe, for example in the cylindrical mill. This increases the productivity of the wet mill and improves the homogeneity of the slip.

Owing to the pre-dry-milling of the "non-plastic" raw materials, the wet-milling is more effective to the extent of influencing also firing of the ceramic tiles that are obtained from ceramic granules of the corresponding liquid mixtures. In fact, it has been ascertained by experiment that such ceramic tiles can be fired at a temperature that is 1%-1.2% lower than the usual firing temperature, this enabling lower consumption of the fuel of the firing kiln. Despite the greater energy required for dry pre-milling of the "non-plastic" raw materials, the overall energy balance makes this solution economic.

In the wet embodiments, preparing the paste comprises extracting water from the water-based suspension, i.e. removing excess water until a paste is obtained having the desired water content, i.e. the desired humidity. The water-based suspension is then condensed until a solid content of the suspension defines a paste with the desired water content. This can occur via filter-pressing of the water-based suspension to separate the solid content from a liquid content of the water-based suspension.

Alternatively, the excess water can be removed by decanting the water-based suspension, for example in a decanting tank, and extracting the excess water vehicle, for example by a pumping system.

In one embodiment, the excess water is removed by centrifugal decanting, exploiting the centrifugal force to separate a liquid that is denser than a less dense liquid. The denser liquid thus defines the paste, which will be subsequently reduced into pellets or granules. In one embodiment, the solid content or dense liquid obtained by removing water from the water-based suspension can have high humidity, for example around 20-22%. In this case, the separate solid content or separate dense liquid can be pre-mixed with a fraction of fine product produced during scraping and be recovered, so as to form the paste with the desired humidity content, for example around 15%. This pre-mixing is carried out upstream of granulation by scraping, so that the humidity content of the product obtained by the water removal step is reduced, the formation of lumps of paste is ensured and further material that is too fine, that would be otherwise discarded, is recovered and returned to the material production cycle in the form of paste.

However the excess water is removed, the solid content that defines the paste can be mixed to maintain the paste homogenous.

The excess water removed from the water-based suspension can be reused for preparing a further water-based suspension in a new production cycle of flowable ceramic material in powder form.

The quantity of water delivered in the wet-milling process to obtain the liquid mixture, i.e. the water-based suspension, with which to subsequently obtain the paste, is removed from the water solution in a much smaller quantity than the quantity evaporated in the atomization process, by about half. In fact, the water content of the liquid mixture, generally 35-38-40%, is reduced to 5-7% water content in the atomized powder in the atomization process and, for example, to 18-20% or even to 15% water content in the paste in the method according to the invention. Accordingly, the energy necessary for removing the excess water to obtain the paste is clearly less than what is necessary for the atomizer to evaporate the water from the water solution.

It should be noted that the removal methods adopted are of mechanical type, i.e. they exploit mechanical energy and not thermal energy, as in the case of atomization, as the water is removed without supplying heat to the liquid mixture.

The saving is not only an energy saving but also a water saving, in fact the excess water that is removed to obtain the paste is not lost through evaporation, as in atomization, but is recovered to be used in a new paste-preparing cycle according to the invention.

A water-based suspension is also prepared in the hybrid case, in which the plastic, in particular clay, part of the raw materials is dosed and dissolved in a water-based liquid. Dissolution can, for example, be by a high-speed dissolver. In this case, the water-based suspension does not have the composition corresponding to the recipe of the mixture that it is desired to obtain inasmuch as a remaining part of the raw materials of the mixture is prepared dry, i.e. dosed and machined dry.

In this embodiment, the paste is thus obtained by mixing the water-based suspension with the remaining dry-milled part of the raw materials. In this manner, the water contained in the water-based suspension can be sufficient for obtaining the paste with the water content. A quantity of water-based liquid that is sufficient to form the paste can thus be dosed already in the dissolution step of the clay part of the hybrid mixture or, alternatively, can be reached by adding further water-based liquid during the step of kneading the water-based suspension with the part of dry-milled raw materials. The overall quantity of water-based liquid to be used can vary on the basis of the intrinsic humidity of the clay raw materials used; it is thus necessary to measure the humidity of the raw materials in the preliminary steps preparing the paste.

A water-based liquid is water or a water-based liquid to which additives can be added, for example to adjust the rheological behaviour of the water solution or of the paste that it is desired to prepare, or of both. In the present description, the words water and water-based liquid are to be considered to be interchangeable.

The embodiments of the method that provide preparing the paste from the hybrid mixture enable a minimum quantity of water to be used to obtain the paste, with consequent saving in energy and water consumption terms compared with the known atomization technique.

Mixing can be divided into two intervals of time, the first interval being the time in which the solid portion is actually kneaded with the liquid portion of mixture and the paste is obtained, and the second interval being necessary for homogenization of the paste that has been already obtained. For example, in the case of a paste obtained from a hybrid mixture, the homogenization interval can also last more than the interval of time for obtaining the paste.

As already indicated above, the paste obtained is reduced into granules, i.e. undergoes subsequent granulation through scratching. The paste, which can be in the form of small lumps, is placed in contact with a brush, for example a rotating brush. The interaction of the brush with the paste produces paste pellets that are collected and define ceramic granules.

The ceramic granules can be made rounder by rolling, for example in a rolling drum.

The still plastic, possibly rounded, ceramic granules are subsequently dried to obtain flowable ceramic material in powder form.

Considering the overall energy expenditure necessary for kneading and thus obtaining the paste, mixing for homogenizing the paste, granulating, possibly rounding the ceramic granules and drying the granules to produce flowable ceramic material in powder form, this is less than that of traditional atomization.

The flowable ceramic material in powder form obtained from the method steps according to the invention has features that are comparable with those of the atomized powder of known type for the same type of mixture composition i.e. of recipe.

In Table 1, shown here below, characteristic parameters of samples of the ceramic granules are shown that are obtained with different embodiments of the method according to the present invention with the same recipe. Sample A is a flowable ceramic material in powder form obtained from a paste prepared with hybrid technique and sample B is a flowable ceramic material in powder form obtained from a paste prepared with a wet technique. The reference is the atomized powder with the same composition of the two samples A and B and is taken as a reference.

**TAB.1**

| **Property** | **A** | **B** | **Reference** |
|---|---|---|---|
| Humidity | 6.20% | 6.54% | 6.00% |
| Apparent stroke density | 93 g--104 g | 95 g --98 g | 105 g--111 g |
| Flowability | 28 sec. | 27 sec. | 25 sec. |
| Granulometric distribution (%) - mesh dimension (micron) | | | |
| 1000 | 1.05% | 2.00% | 0.90% |
| 500 | 17.84% | 32% | 22.52% |
| 250 | 53.62% | 57% | 64.22% |
| 125 | 16.83% | 6.60% | 7.56% |
| 63 | 8.84% | 1.80% | 1.33% |
| Sotto | 1.69% | 1.50% | 1.96% |

The granulation and drying conditions applied are the same as for the two samples A and B.

As can be observed, the granulometric curves approach those of the atomized powder, in particular for sample B. Further, the flowability and the humidity of the samples enable powder ceramic materials to be used for forming ceramic tiles by pressing.

The method according to the invention lastly enables a ceramic press to be fed with the flowable ceramic material in powder form obtained to form ceramic tiles, in particular porcelain stoneware ceramic tiles.

From what has been disclosed above, the method according to the invention enables the prior-art atomization step to be avoided and the consumption to be thus reduced of fuel that is necessary for heating and removing the water from the ceramic material during preparation treatment of the ceramic material to make the ceramic material suitable for forming by pressing. By reducing fuel consumption, carbon dioxide emissions into the atmosphere are also reduced, this constituting a clear advantage for the environment. Further, the above method, in the embodiment in which the paste is prepared with wet technique, does not modify the steps relating to milling upstream of the production of the flowable ceramic material and the pressing steps downstream of the flowable ceramic material, this enabling this embodiment of the method to be adopted, applying the embodiment in existing plants to produce ceramic tiles, in particular porcelain stoneware ceramic tiles.

## Claims

1. Method for producing flowable ceramic material in the form of granules used for the manufacturing of ceramic tiles by pressing said granules comprising the steps of:
- preparing a paste from a mixture of raw materials, said raw materials comprising clays, inerts and fluxes according to a defined recipe of a ceramic mix of said ceramic tiles;
- granulating said paste to obtain ceramic granules, wherein said granulating comprises scratching said paste to remove pellets from said paste and thereby obtain said ceramic granules.

2. Method according to claim 1, wherein said paste has a humidity comprised between 14% and 17% in weight or between 18% and 20% in weight.

3. Method according to claim 1, or 2, wherein said preparing a paste comprises mixing a fraction of dry-milled raw materials with the remaining fraction of wet-milled raw materials.

4. Method according to claim 3, wherein said fraction and said remaining fraction have the same composition of raw materials in relation to said recipe or said fraction of said dry-milled raw materials comprises non-clay raw materials and said remaining fraction of wet-milled raw materials comprises clay raw materials in such a manner that when joined together they correspond to said recipe.

5. Method according to claim 1, or 2, wherein said preparing a paste comprises preparing a water-based suspension of said raw materials.

6. Method according to claim 5, wherein said preparing a paste further comprises removing excess of water from said water-based suspension until a paste is obtained having a desired humidity.

7. Method according to claim 6, wherein said removing excess of water comprises applying a filter-press technique to said water-based suspension or decanting said water-based suspension or applying a centrifugal decanting technique to said water-based suspension, to separate a liquid content from a solid content of said water-based suspension, in which said solid content defines said paste.

8. Method according to claim 7, wherein said excess of water is collected and reused to prepare a further water-based suspension.

9. Method according to any one of claims 5 to 8, wherein said preparing a water-based suspension comprises wet-milling said mixture of raw materials.

10. Method according to claim 9, wherein upstream of said wet-milling there is provided dosing solid non-clay components of said recipe, said solid non-clay components being pre-milled in dry condition.

11. Method according to claim 5, wherein said preparing a water-based suspension comprises dissolving a clay part of said raw materials in a water-based liquid.

12. Method according to claim 11, wherein after said dissolving there is provided kneading said paste by mixing said water-based suspension with a remaining part of said raw materials, said remaining part being dry-milled.

13. Method according to any preceding claim, wherein said scratching comprises making said paste interact with a brush.

14. Method according to any preceding claim, wherein after said granulating there is provided giving said ceramic granules a round shape by rolling so as to obtain rounded granules.

15. Method according to any preceding claim, wherein after said granulating there is provided drying said ceramic granules to obtain said flowable ceramic material in the form of granules suitable for feeding a ceramic press for forming said ceramic tiles.

16. Method according to claim 15, wherein after said drying there is provided feeding a ceramic press with said flowable ceramic material in the form of granules for forming said ceramic tiles.

17. Method according to any preceding claim, wherein said recipe is a formulation of a ceramic mix for porcelain stoneware tiles.

## Patentansprüche

1. Verfahren zum Herstellen von fließfähigem keramischen Material in der Form von Granulen, die zur Herstellung von keramischen Fliesen durch Pressen der Granulen verwendet wird, mit den folgenden Schritten:
- Vorbereiten einer Paste aus einer Mischung von Rohmaterialien, wobei die Rohmaterialien Tonsorten, Füllmittel und Flussmittel gemäß einer definierten Rezeptur einer keramischen Mischung der keramischen Fliesen aufweist;
- Granulieren der Paste, um keramische Granulen zu erhalten, wobei das Granulieren das Kratzen der Paste umfasst, um Pellets von der Paste zu lösen und dadurch die keramischen Granulen zu erhalten.

2. Verfahren nach Anspruch 1, bei dem die Paste eine Feuchtigkeit aufweist, die zwischen 14 Gew.-% und 17 Gew.-% oder zwischen 18 Gew.-% und 20 Gew.-% beträgt.

3. Verfahren nach Anspruch 1, oder 2, bei dem das Vorbereiten einer Paste das Mischen eines Anteils von trocken gemahlenen Rohmaterialien mit dem verbleibenden Anteil von nass gemahlenen Rohmaterialien aufweist.

4. Verfahren nach Anspruch 3, bei dem der Anteil und der verbleibende Anteil dieselbe Zusammensetzung von Rohmaterialien in Bezug auf die Rezeptur haben oder der betreffende Anteil der trocken gemahlenen Rohmaterialien nicht tonhaltige Rohmaterialien umfasst und der verbleibende Anteil von nass gemahlenen Rohmaterialien Ton-Rohmaterialien auf eine solche Weise umfasst, dass sie dann, wenn sie miteinander vermischt werden, der Rezeptur entsprechen.

5. Verfahren nach Anspruch 1, oder 2, bei dem das Vorbereiten einer Paste das Vorbereiten einer wasserbasierten Suspension von Rohmaterialien umfasst.

6. Verfahren nach Anspruch 5, bei dem das Vorbereiten einer Paste ferner das Entfernen von überschüssigem Wasser aus der wasserbasierten Suspension umfasst, bis eine Paste erhalten wird, die eine gewünschte Feuchte aufweist.

7. Verfahren nach Anspruch 6, bei dem das Entfernen von überschüssigem Wasser das Anwenden eines Filter-Press-Verfahrens auf die wasserbasierte Suspension oder das Dekantieren der wasserbasierten Suspension oder das Anwenden eines Zentrifugen-Dekantierverfahren auf die wasserbasierte Suspension umfasst, um einen Flüssigkeitsgehalt von einem Feststoffgehalt der wasserbasierten Suspension zu trennen, in welcher der Feststoffgehalt die Paste definiert.

8. Verfahren nach Anspruch 7, bei dem das überschüssige Wasser gesammelt wird und wiederverwendet wird, um eine weitere wasserbasierte Suspension vorzubereiten.

9. Verfahren nach irgendeinem der Ansprüche 5 bis 8, bei dem das Vorbereiten einer wasserbasierten Suspension das Nassmahlen der Mischung von Rohmaterialien umfasst.

10. Verfahren nach Anspruch 9, bei dem vor der Nassmahlung ein Dosieren von festen nicht tonhaltigen Komponenten der Rezeptur erfolgt, wobei die festen, nicht tonhaltigen Komponenten im trockenen Zustand vorgemahlen werden.

11. Verfahren nach Anspruch 5, bei dem das Vorbereiten einer wasserbasierten Suspension das Auflösen eines Tonanteils von Rohmaterialien in einer wasserbasierten Flüssigkeit umfasst.

12. Verfahren nach Anspruch 11, bei dem nach dem Auflösen ein Kneten der Paste durch Mischen der wasserbasierten Suspension mit einem verbleibenden Anteil der Rohmaterialien umfasst, wobei der verbleibende Anteil trocken gemahlen wird.

13. Verfahren nach irgendeinem vorhergehenden Anspruch, bei dem das Kratzen ein Interagieren der Paste mit einem Pinsel umfasst.

14. Verfahren nach irgendeinem vorhergehenden Anspruch, bei dem nach dem Granulieren ein Schritt durchgeführt wird, in dem keramischen Granulen durch Rollen eine runde Form gegeben wird, um so abgerundete Granulen zu erhalten.

15. Verfahren nach irgendeinem vorhergehenden Anspruch, bei dem nach dem Granulieren ein Trocknen der keramischen Granulen durchgeführt wird, um das fließfähige keramische Material in der Form von Granulen zu erhalten, die geeignet sind, zu einer keramischen Presse gefördert zu werden, um die keramischen Fliesen zu formen.

16. Verfahren nach Anspruch 15, bei dem nach dem Trocknen ein Zuführen des fließfähigen keramischen Materials in der Form von Granulen zu einer keramischen Presse zum Formen der keramischen Fliesen durchgeführt wird.

17. Verfahren nach irgendeinem vorhergehenden Anspruch, bei dem die Rezeptur eine Formulierung einer keramischen Mischung für Porzellanfliesen in Form von Steinzeug ist.

## Revendications

1. Procédé pour produire une céramique fluable sous la forme de granules utilisés pour la fabrication de carreaux céramiques en pressant lesdits granules, comprenant les étapes de :
- préparer une pâte à partir d'un mélange de matières premières, lesdites matières premières comprenant des argiles, des matières inertes et des flux d'après une recette définie d'un mélange céramique desdits carreaux céramiques ;
- granuler ladite pâte pour obtenir des granules céramiques, dans lequel ladite granulation comprend de strier ladite pâte pour retirer des boulettes de ladite pâte et ainsi obtenir lesdits granules céramiques.

2. Procédé selon la revendication 1, dans lequel ladite pâte a une humidité comprise entre 14 % et 17 % en poids ou entre 18 % et 20 % en poids.

3. Procédé selon la revendication 1 ou 2, dans lequel ladite préparation d'une pâte comprend de mélanger une fraction de matières premières broyées à sec avec la fraction restante de matières premières broyées humides.

4. Procédé selon la revendication 3, dans lequel ladite fraction et ladite fraction restante ont la même composition de matières premières par rapport à ladite recette ou ladite fraction desdites matières premières broyées à sec comprend des matières premières non argileuses et ladite fraction restante de matières premières broyées humides comprend des matières premières argileuses d'une manière telle que lorsqu'elles sont réunies ensemble, elles correspondent à ladite recette.

5. Procédé selon la revendication 1 ou 2, dans lequel ladite préparation d'une pâte comprend de préparer une suspension à base d'eau desdites matières premières.

6. Procédé selon la revendication 5, dans lequel ladite préparation d'une pâte comprend en outre de retirer un excès d'eau de ladite suspension à base d'eau jusqu'à ce qu'une pâte soit obtenue ayant une humidité voulue.

7. Procédé selon la revendication 6, dans lequel ledit retrait d'un excès d'eau comprend d'appliquer une technique de filtre-presse à ladite suspension à base d'eau ou de décanter ladite suspension à base d'eau ou d'appliquer une technique de décantation centrifuge à ladite suspension à base d'eau, pour séparer un contenu liquide d'un contenu solide de ladite suspension à base d'eau, dans lequel ledit contenu solide définit ladite pâte.

8. Procédé selon la revendication 7, dans lequel ledit excès d'eau est collecté et réutilisé pour préparer une suspension supplémentaire à base d'eau.

9. Procédé selon l'une quelconque des revendications 5 à 8, dans lequel ladite préparation d'une suspension à base d'eau comprend de broyer ledit mélange de matières premières humides.

10. Procédé selon la revendication 9, dans lequel en amont dudit broyage à l'état humide, il est prévu de doser des composants non argileux solides de ladite recette, lesdits composants non argileux solides étant pré-broyés à l'état sec.

11. Procédé selon la revendication 5, dans lequel ladite préparation d'une suspension à base d'eau comprend de dissoudre une partie argileuse desdites matières premières dans un liquide à base d'eau.

12. Procédé selon la revendication 11, dans lequel après ladite dissolution, il est fourni un malaxage de ladite pâte en mélangeant ladite suspension à base d'eau avec une partie restante desdites matières premières, ladite partie restante étant broyée à sec.

13. Procédé selon l'une quelconque des revendications précédentes, dans lequel ledit striage comprend de faire interagir ladite pâte avec une brosse.

14. Procédé selon l'une quelconque des revendications précédentes, dans lequel après ladite granulation, il est prévu de donner une forme ronde auxdits granules céramiques par roulage de manière à obtenir des granules ronds.

15. Procédé selon l'une quelconque des revendications précédentes, dans lequel après ladite granulation, il est prévu de sécher lesdits granules céramiques pour obtenir ladite céramique fluable sous la forme de granules adaptés pour alimenter une presse à céramique pour former lesdits carreaux céramiques.

16. Procédé selon la revendication 15, dans lequel après ledit séchage, il est prévu d'alimenter une presse à céramique avec ladite céramique fluable sous la forme de granules pour former lesdits carreaux céramiques.

17. Procédé selon l'une quelconque des revendications précédentes, dans lequel ladite recette est une formulation d'un mélange céramique pour des carreaux en grès cérame de porcelaine.
